# EUROPÄISCHE PATENTSCHRIFT

(11) **EP 3 640 523 B1**
(45) Veröffentlichungstag und Bekanntmachung des Hinweises auf die Patenterteilung: **03.03.2021**
(21) Anmeldenummer: 19190754.2
(22) Anmeldetag: 08.08.2019
(51) Int. Cl.: F16P 3/14

(54) **VERFAHREN ZUM SCHUTZ VON MENSCHEN IN EINER UMGEBUNG EINER BEWEGLICHEN MASCHINE**
METHOD FOR PROTECTING HUMANS IN AN ENVIRONMENT OF A MOVABLE MACHINE
PROCÉDÉ DE PROTECTION DES PERSONNES DANS L'ENVIRONNEMENT D'UNE MACHINE MOBILE

(30) Priorität: 17.10.2018 DE 102018125736
(43) Veröffentlichungstag der Anmeldung: 22.04.2020
(73) Patentinhaber: SICK AG, 79183 Waldkirch (DE)
(72) Erfinder: Prinz, Oliver, 79183 Waldkirch/Breisgau (DE); Hofmann, Christoph, 79183 Waldkirch/Breisgau (DE)
(74) Vertreter: Manitz Finsterwald Patent- und Rechtsanwaltspartnerschaft mbB

(56) Entgegenhaltungen:
- EP-A1- 1 947 377
- EP-A1- 2 944 985
- WO-A1-2008/028871
- WO-A1-2011/072924

## Beschreibung

Die vorliegende Erfindung betrifft ein Verfahren zum Schutz von Menschen in einer Umgebung einer beweglichen Maschine, insbesondere im Rahmen einer Mensch-Roboter-Kollaboration, welches umfasst, dass die Umgebung mittels einer Schutzeinrichtung überwacht wird, die dazu ausgebildet ist, einen oder mehrere kinematische Parameter eines jeweiligen in der Umgebung befindlichen Objekts zu erfassen und die bewegliche Maschine in Abhängigkeit von erfassten kinematischen Parametern des jeweiligen Objekts zu einer Schutzmaßnahme anzusteuern. Die Erfindung betrifft ferner eine Schutzeinrichtung für eine bewegliche Maschine, die zur Ausführung eines solchen Verfahrens ausgebildet ist, sowie eine bewegliche Maschine mit zumindest einer derartigen Schutzeinrichtung.

Ein Verfahren sowie eine Vorrichtung zum Überwachen einer Werkzeugmaschine, insbesondere einer Kreissäge, ist beispielsweise aus WO 2008/028871 A1 bekannt. Dabei erfasst eine Erkennungseinheit, insbesondere mittels eines Ultrabreitband-Radarsensors, die Position und/oder Geschwindigkeit von Objekten in einer nahen Umgebung der Maschine, wobei zusätzlich eine Erkennung von menschlichem oder tierischem Gewebe mittels einer spektralen Auswertung des ultrabreitbandigen Signals vorgenommen wird. Ein weiteres Verfahren und eine weitere Vorrichtung zum Überwachen einer Umgebung einer Maschine, insbesondere einer Kreissäge, ist aus WO 2011/072924 A1 bekannt. Dabei wird die Materialart eines jeweiligen Objekts mittels spektraler Auswertung infraroter Strahlung erfasst. Als charakteristische Größe wird dabei insbesondere die (integrierte) Intensität der erfassten Strahlung über einen gewissen Wellenlängen-, Frequenz- oder Zeitbereich genutzt. Neben dem Erfassen von Fingerabdrücken wird auch eine Lebenderkennung beschrieben, bei der Puls, Blutzirkulation, Wärme und/oder ein 3D-Tiefenmuster erfasst werden und Infrarotverfahren, kapazitive Verfahren oder Ultra-Schall=Verfahren zum Einsatz kommen können.

Im industriellen Umfeld können verschiedene Arbeiten von beweglichen Maschinen, wie z.B. von Robotern, ausgeführt werden. Dies betrifft insbesondere Arbeiten, bei denen besonders große Kräfte ausgeübt werden müssen und/oder die mit hoher Geschwindigkeit und Präzision wiederholt auszuführen sind. Andere Arbeiten lassen sich besser von Menschen ausführen. Dies betrifft insbesondere Arbeiten, die schwer zu automatisieren sind, etwa weil sie Erfahrung und/oder eine hohe Anpassungsfähigkeit voraussetzen. Bei Prozessen, die sowohl Arbeiten der einen Art als auch Arbeiten der anderen Art umfassen, ist es daher zweckmäßig, wenn Menschen und bewegliche Maschinen zusammenarbeiten, um die jeweiligen Stärken möglichst effizient zu kombinieren.

Für eine solche Mensch-Roboter-Kollaboration (MRK) ergeben sich jedoch hohe Anforderungen an die Sicherheit der beteiligten Menschen, da die beteiligten beweglichen Maschinen insbesondere aufgrund ihrer Kraft und Geschwindigkeit eine Gefahr für die Menschen darstellen können. Es müssen daher Vorkehrungen getroffen werden, um Schaden an Menschen nach Möglichkeit auszuschließen. Derartige Vorkehrungen umfassen sowohl passive Maßnahmen, beispielsweise dass harte scharfe Kanten an der Außenseite der beweglichen Maschine vermieden und eher weiche und/oder abgerundete Oberflächen vorgesehen werden, als auch aktive Sicherheitsmechanismen, die im Falle einer Gefahr für einen Menschen konkrete Schutzmaßnahmen auslösen, um diese Gefahr abzuwenden. Beispielsweise kann an einem freien Ende eines Roboterarms ein Werkzeug vorgesehen sein, das der Bearbeitung eines Werkstücks dient, jedoch auch einen Menschen verletzen könnte, aufgrund seiner Funktion aber nicht in einer weniger gefährlichen Weise ausgebildet sein kann. Um eine Gefährdung dennoch möglichst auszuschließen, kann es zweckmäßig sein, dafür zu sorgen, dass dieses Werkzeug stets nur mit einem gewissen Sicherheitsabstand zu anwesenden Menschen betrieben werden kann.

In den Normen ISO 10218-1:2011, ISO 10218-2:2011 und insbesondere in der technischen Spezifikation ISO/TS 15066:2016 werden Sicherheitsanforderungen an Industrieroboter, insbesondere an kollaborierende Roboter, definiert. In einer Mensch-Roboter-Kollaboration arbeiten Roboter mit Menschen in einer definierten Arbeitsumgebung zusammen, ohne dabei durch eine Trennvorrichtung dauerhaft räumlich voneinander getrennt zu sein. Eine Gefahr für einen an der Kollaboration beteiligten Menschen kann sich dabei insbesondere dadurch ergeben, dass die bewegliche Maschine mit ihrer Bewegung einen Menschen trifft. Dieser Gefahr kann entsprechend den genannten Vorgaben auf verschiedene Weisen begegnet werden.

Eine Möglichkeit besteht darin, dass die bewegliche Maschine nur unter direkter Kontrolle durch einen Menschen betrieben wird, der somit selbst sicherstellen kann, dass weder er noch andere Menschen durch die bewegliche Maschine zu Schaden kommen. Erfolgt die Ansteuerung der beweglichen Maschine hingegen automatisch oder arbeitet die bewegliche Maschine sogar autonom, kann die Sicherheit der mit der beweglichen Maschine zusammenarbeitenden Menschen gemäß einem weiteren Sicherungskonzept dadurch gewährleistet werden, dass die Bewegungen der beweglichen Maschine, insbesondere ihre Kraft und Geschwindigkeit, so limitiert werden, dass ein Mensch selbst bei einem Zusammenstoß mit der Maschine höchstwahrscheinlich weder Schmerzen noch Verletzungen davonträgt. Ein solches auf einer Limitierung der beweglichen Maschine beruhendes Sicherheitskonzept ist jedoch nur möglich, wenn die Arbeit, für die die bewegliche Maschine eingesetzt wird, keine hohen Kräfte oder Geschwindigkeiten erfordert.

Gemäß einem alternativen Sicherungskonzept wird darauf abgezielt, dass es erst gar nicht zu einem Kontakt zwischen einem Menschen und der beweglichen Maschine kommt, zumindest solange diese in Betrieb ist. Dazu wird sichergestellt, dass die bewegliche Maschine nur dann in Betrieb gesetzt werden kann, wenn sich kein Mensch in einer definierten Umgebung der beweglichen Maschine befindet, und unverzüglich angehalten wird, sobald ein Mensch in die definierte Umgebung eindringt. Diese Umgebung kann insbesondere durch einen Sicherheitsabstand zu der Maschine oder zu einem Werkzeug der Maschine definiert sein und kann dabei statisch oder, wenn die Umgebung relativ zu einem sich bewegenden Element der beweglichen Maschine definiert ist, auch dynamisch sein. Die Umgebung wird dabei (zumindest bei Betrieb der beweglichen Maschine) laufend überwacht, so dass auf die Anwesenheit eines Menschen in der Umgebung unverzüglich reagiert werden kann.

Gemäß einer Erweiterung dieses Sicherheitskonzepts ist vorgesehen, dass nicht lediglich binär zwischen freigegebenem Betrieb der beweglichen Maschine bei vollständig freier Umgebung und sofortigem Zwangsstopp, sobald sich ein Mensch in der Umgebung befindet, unterschieden wird, sondern ein abgestufter oder fließender Übergang erfolgt. Dazu werden als Schutzmaßnahme bei Annäherung eines Menschen an die bewegliche Maschine deren Bewegungen nicht gleich gestoppt, sondern zunächst lediglich reduziert, insbesondere verlangsamt. Dies kann kontinuierlich erfolgen, so dass mit zunehmender Annäherung die Bewegungen immer langsamer und/oder schwächer werden. Die Bewegungsreduktion erfolgt dabei derart, dass sichergestellt wird, dass die bewegliche Maschine spätestens kurz vor einem Kontakt mit einem Menschen einen sicheren Betriebszustand eingenommen hat, insbesondere entweder vollständig stillsteht oder nur noch Bewegungen ausführt, von denen keine Gefahr von Schmerzen oder Verletzungen für den jeweiligen Menschen mehr ausgeht.

Für die Umsetzung eines solchen Sicherheitskonzepts ist es wichtig, die Präsenz und vorzugsweise auch die Bewegungen von Menschen im Umfeld der Maschine präzise zu erfassen, um die Bewegungen der beweglichen Maschine daran anpassen zu können. Insbesondere der Abstand eines Menschen von der beweglichen Maschine sowie die Geschwindigkeit, mit der sich der Mensch auf die bewegliche Maschine zu bewegt, sind wichtige Parameter dafür, wie sehr die Bewegungen der beweglichen Maschine reduziert werden sollen. Dieses Sicherheitskonzept wird daher auch als "Speed and Separation Monitoring" (SSM) bezeichnet.

Grundsätzlich können der Abstand und die Geschwindigkeit eines Objekts auf verschiedene Weisen erfasst werden. Eine Schwierigkeit kann sich aber dadurch ergeben, dass sich in dem Arbeitsbereich, in dem die bewegliche Maschine mit einem oder mehreren Menschen zusammenarbeitet, eine Vielzahl weiterer, sich unter Umständen bewegender Objekte befinden kann, möglicherweise auch eine oder mehrere weitere bewegliche Maschinen. Dabei können auch eigentlich ortsfeste Objekte Bewegungen aufweisen, z.B. vibrierende Maschinen.

Derartige Objekte können die Überwachung des Umfelds einer beweglichen Maschine erschweren, wenn ihre Position und Bewegung gleichermaßen wie die Positionen und Bewegungen von in dem Umfeld befindlichen Menschen erfasst und für die Entscheidung über das Auslösen von Schutzmaßnahmen berücksichtigt werden. Dies gilt nicht nur, weil derartige nicht-menschliche Objekte nicht im Fokus eines Sicherungskonzepts zum Schutz von Menschen stehen und daher zumindest im Rahmen eines solchen Sicherungskonzeptes nicht berücksichtigt zu werden brauchen, sondern auch deshalb, weil es sich bei den Objekten unter Umständen um Objekte handelt, für die eine Kollision mit der beweglichen Maschine bereits aus anderen Gründen ausgeschlossen werden kann, etwa weil sich das Objekt zwar bewegt, aber ohnehin einen Raumbereich nicht verlassen kann, der außerhalb des Bewegungsradius der beweglichen Maschine liegt.

Es ist eine Aufgabe der Erfindung, ein Verfahren der genannten Art zum Schutz von Menschen in einer Umgebung einer beweglichen Maschine, eine Schutzeinrichtung für eine bewegliche Maschine, die zur Ausführung eines solchen Verfahrens ausgebildet ist, bzw. eine bewegliche Maschine mit zumindest einer derartigen Schutzeinrichtung bereitzustellen, die sich, insbesondere zur Umsetzung eines sogenannten "Speed and Separation Monitoring", besonders effizient und zuverlässig einsetzen lassen.

Die Aufgabe wird gelöst durch ein Verfahren mit den Merkmalen des Anspruchs 1, durch eine Schutzeinrichtung mit den Merkmalen des Anspruchs 9 sowie durch eine bewegliche Maschine mit den Merkmalen des Anspruchs 15. Vorteilhafte Ausführungsformen ergeben sich aus den Unteransprüchen, der vorliegenden Beschreibung sowie den Figuren.

Das erfindungsgemäße Verfahren umfasst, dass die Umgebung der zu sichernden beweglichen Maschine mittels einer Schutzeinrichtung überwacht wird. Insbesondere kann es sich bei dieser Schutzeinrichtung um eine berührungslos wirkende Schutzeinrichtung (BWS) handeln. Die Schutzeinrichtung ist dazu ausgebildet, einen oder mehrere kinematische Parameter eines jeweiligen in der Umgebung befindlichen Objekts zu erfassen. Bei den kinematischen Parametern handelt es sich insbesondere um den Ort, die Geschwindigkeit und/oder die Beschleunigung des jeweiligen Objekts. Dabei kann es vorteilhaft sein, diese Größen jeweils vollständig in drei Raumdimensionen zu erfassen. Dies ist jedoch nicht zwingend. Vielmehr kann es z.B. reichen, als Ort lediglich den Abstand des jeweiligen Objekts von der beweglichen Maschine, als Geschwindigkeit lediglich eine Geschwindigkeitskomponente in Richtung auf die bewegliche Maschine zu und/oder als Beschleunigung die Beschleunigung in diese Richtung zu erfassen. Mittels der Schutzeinrichtung können grundsätzlich Objekte beliebiger Art erfassbar sein, insbesondere können damit kinematische Parameter sowohl eines oder mehrerer Menschen als auch eines oder mehrerer nicht-menschlicher Objekte in der Umgebung der beweglichen Maschine erfassbar sein.

Ferner ist die Schutzeinrichtung dazu ausgebildet, die bewegliche Maschine in Abhängigkeit von erfassten kinematischen Parametern des jeweiligen Objekts zu einer Schutzmaßnahme anzusteuern. Die Schutzmaßnahme kann darin bestehen, dass Bewegungen der beweglichen Maschine reduziert, also insbesondere verlangsamt und/oder abgeschwächt, oder auch vollständig angehalten werden. Eine solche Schutzmaßnahme muss sich nicht zwingend auf die gesamte bewegliche Maschine beziehen, sondern kann auf einen Teil der Maschine, von dem speziell eine Gefahr für einen Menschen ausgehen kann, beschränkt sein, z.B. auf ein Werkzeug am Ende eines Roboterarms.

Eine jeweilige Schutzmaßnahme kann beispielsweise bei Unterschreiten eines bestimmten Sicherheitsabstands des jeweiligen Objekts von der beweglichen Maschine ausgeführt werden. Vorzugsweise nehmen die Schutzmaßnahmen mit abnehmendem Abstand zu, etwa indem die Bewegungen desto stärker reduziert werden, je näher das jeweilige Objekt der beweglichen Maschine kommt. Die Zunahme kann dabei kontinuierlich sein oder abgestuft, z.B. durch Vorsehen gestaffelter Sicherheitsabstände.

Die erfasste Geschwindigkeit und/oder die erfasste Beschleunigung des jeweiligen Objekts, insbesondere in Richtung auf die bewegliche Maschine zu, können ergänzend zum erfassten Ort bzw. Abstand herangezogen werden, um daraus ableitbare Erwartungen über den zukünftigen Ort bzw. Abstand des jeweiligen Objekts in die Entscheidung über das Ausführen einer Schutzmaßnahme einzubeziehen. Beispielsweise kann vorgesehen sein, dass Bewegungen der beweglichen Maschine umso stärker reduziert werden, je schneller oder mit je größerer Beschleunigung sich das jeweilige Objekt auf die bewegliche Maschine zu bewegt. Umgekehrt kann die Bewegungsreduzierung geringer ausfallen, wenn sich das jeweilige Objekt mit geringer Geschwindigkeit und/oder sich verlangsamend auf die bewegliche Maschine zu bewegt, als wenn es sich mit höherer Geschwindigkeit und/oder sich beschleunigend auf die bewegliche Maschine zu bewegt.

Bezugspunkt an der beweglichen Maschine für die Orts-, insbesondere Abstands-, Geschwindigkeits- und/oder Beschleunigungsmessung ist dabei idealerweise derjenige Teil der beweglichen Maschine, von dem eine Gefahr ausgeht. Die Schutzeinrichtung ist vorzugsweise in dessen Nähe angebracht, so dass sie zumindest näherungsweise selbst als Bezugspunkt herangezogen werden kann. Dabei kann es aber zweckmäßig sein, die daraus resultierende Abweichung rechnerisch möglichst zu kompensieren.

Erfindungsgemäß ist ferner vorgesehen, dass die Schutzeinrichtung Polarisationseigenschaften sowie eine Bewegungsmodulation des jeweiligen Objekts erfasst. Während die Schutzeinrichtung also, wie vorstehend beschrieben, lediglich grundsätzlich dazu ausgebildet ist, kinematische Parameter eines jeweiligen Objekts zu erfassen und bei einer Entscheidung über das Auslösen einer Schutzmaßnahme zu berücksichtigen, ist es für das Verfahren wesentlich, dass mittels der Schutzeinrichtung zumindest Polarisationseigenschaften sowie eine Bewegungsmodulation eines jeweiligen in der Umgebung der beweglichen Maschine befindlichen Objekts konkret erfasst werden. Vorzugsweise erfasst die Schutzeinrichtung die Polarisationseigenschaften und die Bewegungsmodulation zusätzlich zu kinematischen Parametern des jeweiligen Objekts. Es ist aber nicht zwingend erforderlich, dass dieselbe Schutzeinrichtung, welche die Polarisationseigenschaften und die Bewegungsmodulation erfasst, auch kinematische Parameter des jeweiligen Objekts erfasst.

Eine Bewegungsmodulation liegt insbesondere dann vor, wenn eine von dem jeweiligen Objekt erfasste Messgröße eine durch eine Bewegung des jeweiligen Objekts verursachte Modulation aufweist. Insbesondere stellt eine Veränderung der Messgröße, die einem gewissen Muster entspricht, eine solche Modulation dar. Die Modulation kann beispielsweise durch eine oder mehrere charakteristische Frequenzen sowie gegebenenfalls durch eine charakteristische Verteilung der Frequenzen gekennzeichnet sein. Das genannte Erfassen der Bewegungsmodulation eines jeweiligen Objekts kann dabei auch umfassen, dass für das jeweilige Objekt als Ergebnis des Erfassens festgestellt wird, dass keine Bewegungsmodulation vorliegt, etwa weil es sich um ein statisches Objekt handelt.

Des Weiteren ist erfindungsgemäß vorgesehen, dass das jeweilige Objekt in Abhängigkeit sowohl von den erfassten Polarisationseigenschaften als auch von der erfassten Bewegungsmodulation im Hinblick darauf klassifiziert wird, ob es sich bei dem jeweiligen Objekt um einen Menschen handelt. Zusätzlich zum Erfassen von Messdaten, die im Hinblick auf zu ergreifende Schutzmaßnahmen relevant sein können, erfolgt also auch eine Klassifizierung des jeweiligen Objekts, von dem diese Messdaten erhoben wurden. Eine solche Klassifizierung ermöglicht es, für die Entscheidung über das Auslösen von Schutzmaßnahmen die erfassten Messdaten nicht unterschiedslos heranzuziehen, sondern die Art des jeweiligen Objekts spezifisch in die Entscheidung einfließen zu lassen, z.B. indem die Messdaten je nach Art des jeweiligen Objekts gewichtet oder auch vollständig ausgeblendet werden. Zudem kann vorgesehen sein, dass kinematische Parameter überhaupt nur von Objekten einer gewissen Art, insbesondere nur von Objekten, die als Mensch klassifiziert wurden, erfasst werden, während aus Effizienzgründen für andere Objekte auf das Erfassen kinematischer Parameter verzichtet werden kann.

Schließlich umfasst das erfindungsgemäße Verfahren, dass die Schutzeinrichtung dann, insbesondere nur dann, wenn das jeweilige Objekt als Mensch klassifiziert wurde, die bewegliche Maschine in Abhängigkeit von erfassten kinematischen Parametern dieses jeweiligen Objekts zu der Schutzmaßnahme ansteuert. Dabei kann insbesondere vorgesehen sein, die bewegliche Maschine in Abhängigkeit von dem Ort und der Geschwindigkeit des jeweiligen Objekts relativ zu der beweglichen Maschine zu einer jeweiligen Schutzmaßnahme anzusteuern. Diese Parameter lassen sich dann vorteilhafterweise bei einer Überwachung geschwindigkeitsabhängiger Sicherheitsabstände nach Art eines "Speed and Separation Monitoring" berücksichtigen.

Das erfindungsgemäße Verfahren eröffnet die Möglichkeit, Objekte, von denen auszugehen ist, dass es sich dabei jeweils nicht um einen Menschen handelt, bei der Überwachung der Umgebung einer beweglichen Maschine vollständig auszublenden oder zumindest als weniger oder auf andere Weise relevant gesondert zu berücksichtigen. Für die Relevanz können beispielsweise bestimmte Schwellenwerte definiert werden. Dabei können die Schwellenwerte von einer jeweiligen Klassifizierungswahrscheinlichkeit (Fidelity) abhängen. Wenn das jeweilige Objekt als Mensch klassifiziert wurde, erfolgt vorzugsweise eine vollständige und umfassende Berücksichtigung. Das heißt, dass kinematische Parameter des jeweiligen Objekts, also des jeweiligen Menschen, erfasst werden und die Ansteuerung der beweglichen Maschine zu gegebenenfalls erforderlichen Schutzmaßnahmen in Abhängigkeit von diesen erfassten kinematischen Parametern erfolgt. Dafür müssen die kinematischen Parameter des als Mensch klassifizierten jeweiligen Objekts aber nicht zwingend mittels derselben Schutzeinrichtung erfasst werden, die auch die Polarisationseigenschaften und die Bewegungsmodulation dieses Objekts erfasst hat.

Ferner kann auch das Erfassen der kinematischen Parameter eines jeweiligen Objekts jeweils von dem Ergebnis der Klassifizierung dieses Objekts abhängen, so dass beispielsweise nur von einem als Mensch klassifizierten Objekt überhaupt kinematische Parameter erfasst werden. Dadurch können sowohl die Effizienz der Überwachung der beweglichen Maschine als auch die Recheneffizienz der Schutzeinrichtung (und/oder eines Sensors der Schutzeinrichtung) und damit deren Energieverbrauch wesentlich verbessert werden. Alternativ kann aber auch vorgesehen sein, dass das Erfassen kinematischer Parameter der Objekte in der Umgebung der beweglichen Maschine unabhängig von dem Ergebnis der Klassifizierung ist und insbesondere noch vor Durchführung der Klassifizierung, z.B. zeitgleich mit dem Erfassen der Polarisationseigenschaften und der Bewegungsmodulation eines jeweiligen Objekts, erfolgt. Auf diese Weise werden zwar auch von Objekten, die letztlich nicht als Mensch klassifiziert werden, kinematische Parameter erhoben, die dann unter Umständen nicht weiter für die Entscheidung über das Auslösen von Schutzmaßnahmen benötigt werden. Allerdings können dadurch die kinematischen Parameter eines jeweiligen Objekts ergänzend zu dessen Polarisationseigenschaften und Bewegungsmodulation zur Unterstützung oder als zusätzliche Kriterien bei der Klassifizierung des jeweiligen Objekts herangezogen werden, wodurch die Zuverlässigkeit der Klassifizierung noch verbessert werden kann.

Das Erfassen der Polarisationseigenschaften kann insbesondere umfassen, dass eine Veränderung der Polarisation elektromagnetischer Strahlung bei einer Reflexion der elektromagnetischen Strahlung an dem jeweiligen Objekt erfasst wird.

Insofern umfassen die Polarisationseigenschaften eines jeweiligen Objekts dessen Eigenschaft, die Polarisation elektromagnetischer Strahlung bei Reflexion an dem jeweiligen Objekt zu verändern. Diese Eigenschaft hängt wesentlich von dem Material des jeweiligen Objekts ab. Für eine Vielzahl von Objektarten gilt dabei, dass die Polarisation elektromagnetischer Strahlung bei Reflexion an dem jeweiligen Objekt nicht erhalten bleibt. Wird elektromagnetische Strahlung jedoch an einer Metalloberfläche senkrecht reflektiert, bleibt ihre Polarisation erhalten. Auch unter anderen Einfallswinkeln wird die Polarisation bei Reflexion an einer Metalloberfläche zumindest nicht vollständig aufgehoben, sondern nur modifiziert, z.B. kann linear polarisiertes Licht als elliptisch polarisiertes Licht reflektiert werden. Anhand dieser Effekte lassen sich insbesondere metallische Objekte von nicht-metallischen Objekten unterscheiden. Für das Klassifizieren eines jeweiligen Objekts als Mensch kann daher Voraussetzung sein, dass die erfassten Polarisationseigenschaften nicht denjenigen eines metallischen Objekts entsprechen.

Das Erfassen der Bewegungsmodulation kann insbesondere umfassen, dass ein zeitlicher Verlauf der Geschwindigkeit des jeweiligen Objekts erfasst wird und dass in dem Verlauf eine Modulation identifiziert wird. Insbesondere kann eine Veränderung der Geschwindigkeit gemäß einem bestimmten, vorzugsweise vorgegebenen oder vorgebbaren, Muster eine solche Modulation darstellen, sofern eine derartige Veränderung in dem erfassten zeitlichen Verlauf vorhanden ist.

Zum Erfassen des Geschwindigkeitsverlaufs kann es zweckmäßig sein, das jeweilige Objekt in der genannten Umgebung der beweglichen Maschine zu verfolgen. Ein solches Tracking kann beispielsweise anhand zusätzlich erfasster kinematischer Parameter des jeweiligen Objekts erfolgen. Die Geschwindigkeit kann dann, während das jeweilige Objekt verfolgt wird, über einen gewissen Zeitraum oder auch fortlaufend erfasst werden. Auf diese Weise kann ein zeitlicher Verlauf der Geschwindigkeit erfasst werden, innerhalb dessen dann eine Modulation identifiziert wird. So wie das Erfassen der Bewegungsmodulation zu dem Ergebnis führen kann, dass keine Bewegungsmodulation vorliegt, umfasst das genannte Identifizieren der Modulation dabei ebenfalls die Möglichkeit, dass es nicht gelingt, in dem zeitlichen Verlauf eine charakteristische Modulation oder überhaupt eine Modulation zu erkennen.

Gemäß einer Ausführungsform des Verfahrens ist vorgesehen, dass die Schutzeinrichtung das jeweilige Objekt dann als Mensch klassifiziert, wenn zum einen die erfassten Polarisationseigenschaften des jeweiligen Objekts nicht Polarisationseigenschaften entsprechen, die für ein nicht-menschliches Objekt, insbesondere für Metall, zu erwarten sind, für einen Menschen hingegen nicht zu erwarten sind, und wenn zum anderen die erfasste Bewegungsmodulation des jeweiligen Objekts einer Bewegungsmodulation entspricht, die für einen Menschen zu erwarten ist. Mit anderen Worten erfolgt die Klassifizierung des jeweiligen Objekts anhand zumindest zweier Kriterien:
Zum einen werden die erfassten Polarisationseigenschaften ausgewertet. Dabei wird aber nicht der Versuch unternommen, einen Menschen anhand der Polarisationseigenschaften positiv zu identifizieren. Sondern es wird lediglich geprüft, ob die Polarisationseigenschaften nicht dagegen sprechen, dass es sich bei dem jeweiligen Objekt um einen Menschen handelt. Insbesondere kann geprüft werden, ob die Polarisationseigenschaften diejenigen eines Metalls sind, da Metalle anders als viele nicht-metallische Objekte in der Lage sind, die Polarisation reflektierten Lichts zumindest teilweise aufrechtzuerhalten. Anhand der Polarisationseigenschaften kann bezüglich des Klassifizierens des jeweiligen Objekts daher nur negativ festgestellt werden, ob ein Mensch ausgeschlossen werden kann.

Zum anderen wird die erfasste Bewegungsmodulation ausgewertet. Dabei ist es bekannt, dass sich bewegende Menschen, z.B. beim Gehen, charakteristische Bewegungsmodulationen verursachen, die sich messen lassen. Das Feststellen, ob eine solche für einen Menschen charakteristische Bewegungsmodulation vorliegt, kann insbesondere anhand einer Auswertung von Frequenzen der Bewegung erfolgen. Dazu kann die Bewegungsmodulation beispielsweise einer Fourieranalyse unterzogen werden. Eine alternative oder ergänzende Möglichkeit der Auswertung besteht darin, die Bewegungsmodulation anhand neuronaler Netze im Hinblick darauf zu analysieren, ob sie auf einer für einen Menschen typischen Bewegung, z.B. Gehen, beruht. Anhand der Auswertung der Bewegungsmodulation kann somit positiv festgestellt werden, ob es sich bei dem jeweiligen Objekt, um einen Menschen handelt.

Dabei sind beide Kriterien natürlich jeweils mit einer gewissen Unsicherheit behaftet, die je nach Messsituation auch unterschiedlich sein kann. Daher werden die negative Auswertung anhand der Polarisationseigenschaften und die positive Auswertung anhand der Bewegungsmodulation in Kombination berücksichtigt. Vorzugsweise führt die Klassifizierung nur dann zu dem Ergebnis, dass es sich bei dem jeweiligen Objekt um einen Menschen handelt, wenn sowohl die erfassten Polarisationseigenschaften nicht dagegen sprechen als auch die erfasste Bewegungsmodulation dafür spricht.

Gemäß einer weiteren Ausführungsform des Verfahrens ist vorgesehen, dass die Schutzeinrichtung die Polarisationseigenschaften und die Bewegungsmodulation des jeweiligen Objekts mittels desselben Sensors erfasst. Der Sensor kann insbesondere Teil der Schutzeinrichtung sein. Durch diese Ausführungsform kann das Verfahren besonders effizient durchgeführt werden und die Schutzeinrichtung vergleichsweise kompakt ausgebildet sein. Der Sensor ist vorzugsweise sowohl dazu geeignet, elektromagnetische Strahlung auszusenden, als auch elektromagnetische Strahlung zu empfangen, etwa indem er eine oder mehrere Strahlungsquellen sowie einen oder mehrere Detektoren umfasst. Somit können die Polarisationseigenschaften und die Bewegungsmodulation jeweils aus Vergleichen zwischen der ausgesandten und der von dem jeweiligen Objekt reflektierten elektromagnetischen Strahlung erfasst werden. Bei dem genannten Sensor kann es sich insbesondere um einen Radar-Sensor oder einen Lidar-Sensor handeln. Grundsätzlich kommen aber auch andere Sensoren in Betracht, die elektromagnetische Strahlung aussenden und empfangen können.

Das Erfassen der Bewegungsmodulation kann dabei das Erfassen eines zeitlichen Verlaufs der Geschwindigkeit des jeweiligen Objekts umfassen und somit wie dieses auf dem Erfassen einer Dopplerverschiebung zwischen der ausgesandten und der von dem jeweiligen Objekt reflektierten elektromagnetischen Strahlung, z.B. Radar oder Lidar, beruhen, also auf einer von der relativen Geschwindigkeit des reflektierenden Objekts abhängigen Frequenzverschiebung. Grundsätzlich kann das Erfassen der Bewegungsmodulation auch auf anderen Signalen als elektromagnetischer Strahlung beruhen, z.B. auf akustischen Wellen, insbesondere Ultraschall. Vorteilhaft sind dabei Signale mit hoher Trägerfrequenz, da die Dopplerfrequenz mit steigender Trägerfrequenz zunimmt.

Die Polarisationseigenschaften können insbesondere dadurch erfasst werden, dass der genannte Sensor entweder eine polarisierte Strahlungsquelle und zwei orthogonal zueinander polarisierte Detektoren aufweist oder zwei orthogonal polarisierte Strahlungsquellen und einen polarisierten Detektor aufweist. Eine polarisierte Strahlungsquelle kann dabei durch die Kombination einer gewöhnlichen Strahlungsquelle mit einem Polarisator gebildet werden. Sind zwei polarisierte Strahlungsquellen vorgesehen, können diese auch durch zwei Kombinationen derselben Strahlungsquelle mit zwei verschiedenen Polarisatoren gebildet werden. Entsprechendes gilt für die polarisierten Detektoren.

In beiden Fällen können die Polarisationseigenschaften jeweils aus dem Verhältnis R = log(P_{co}/P_{kreuz}) der Leistungen bestimmt werden, die zwischen einer jeweiligen Strahlungsquelle und einem jeweiligen Detektor übertragen werden, wenn diese copolarisiert sind (P_{co}), bzw. die zwischen einer jeweiligen Strahlungsquelle und einem jeweiligen Detektor übertragen werden, wenn diese kreuzpolarisiert sind (P_{kreuz}). Wird die polarisierte Strahlung an einer Metalloberfläche des jeweiligen Objekts reflektiert, so wird ein großer Anteil der Leistung copolarisiert empfangen, während im Idealfall keine Leistung kreuzpolarisiert übertragen wird. Anhand dieses Zusammenhangs kann somit ein Metall erkannt und folglich ein Mensch gegebenenfalls ausgeschlossen werden.

Bei einer Ausführungsform mit zwei polarisierten Strahlungsquellen ist es zweckmäßig, wenn die Strahlungsquellen die jeweils unterschiedlich polarisierte elektromagnetische Strahlung nacheinander, insbesondere abwechselnd, aussenden, um mittels eines einzelnen Detektors die copolarisierte und die kreuzpolarisierte Leistungsübertragung zuverlässig erfassen zu können. Bei einer Ausführungsform mit einer einzigen polarisierten Strahlungsquelle und zwei orthogonal polarisierten Detektoren hingegen können die copolarisierten und die kreuzpolarisierten Anteile parallel erfasst werden.

Gemäß einer vorteilhaften Weiterbildung des Verfahrens ist vorgesehen, dass die Schutzeinrichtung mittels des genannten Sensors zusätzlich zu den Polarisationseigenschaften und der Bewegungsmodulation auch einen oder mehrere kinematische Parameter des jeweiligen Objekts, insbesondere zumindest dessen Ort und/ oder dessen Geschwindigkeit, erfasst. Dies ist insbesondere mittels eines Radar-Sensors oder eines Lidar-Sensors möglich. Grundsätzlich kann die Schutzeinrichtung somit zur Ausführung des gesamten Verfahrens für eine Überwachung der Umgebung der beweglichen Maschine lediglich einen einzigen Sensor aufweisen. Das Erfassen kinematischer Parameter des jeweiligen Objekts kann aber auch mittels eines anderen Sensors als des für das Erfassen der Polarisationseigenschaften und der Bewegungsmodulation genutzten Sensors erfolgen. In diesem Fall umfasst die Schutzeinrichtung neben dem genannten Sensor zumindest einen gesonderten weiteren Sensor.

Grundsätzlich kann es ausreichen, wenn die jeweiligen kinematischen Parameter lediglich in radialer Richtung, also in Richtung zur beweglichen Maschine bzw. zum jeweiligen Sensor, erfasst werden und die Raumwinkel vernachlässigt werden. Die jeweiligen kinematischen Parameter können aber auch umfassender, insbesondere vollständig in drei Dimensionen, erfasst werden. Um richtungsspezifisch messen zu können, kann beispielsweise ein Radar-Sensor genutzt werden mit zumindest einer Sendeantenne, die Mikrowellenstrahlung in den gesamten Raum oder zumindest einen Raumbereich ausstrahlt, und mit zumindest einer Empfangsantenne, die reflektierte Mikrowellenstrahlung richtungsspezifisch empfängt. Dazu kann die Empfangsantenne als sogenannte Phased-Array-Antenne ausgebildet sein. Es kann grundsätzlich auch umgekehrt vorgesehen sein, dass die Sendeantenne als Phased-Array-Antenne ausgebildet ist und richtungsspezifisch aussendet, wobei die Empfangsantenne dann richtungsunspezifisch empfangen kann.

Gemäß einer weiteren vorteilhaften Ausführungsform ist ferner vorgesehen, dass die Schutzeinrichtung mittels zumindest eines weiteren Sensors, dessen Messprinzip sich von demjenigen des genannten Sensors unterscheidet, die Polarisationseigenschaften und/oder die Bewegungsmodulation des jeweiligen Objekts erfasst. Mit anderen Worten werden zumindest entweder die Polarisationseigenschaften oder die Bewegungsmodulation, vorzugsweise beides, nicht nur mittels des einen genannten Sensors, sondern mittels zweier Sensoren erfasst, wobei sich diese zwei Sensoren hinsichtlich ihres jeweiligen Messprinzips unterscheiden. Wenn es sich bei dem genannten Sensor beispielsweise um einen Radar-Sensor handelt, kann es sich bei dem weiteren Sensor insbesondere um einen optischen Sensor, vorzugsweise um einen Lidar-Sensor, handeln. Beispielsweise kann der Radar-Sensor sowohl zum Erfassen der Polarisationseigenschaften als auch der Bewegungsmodulation des jeweiligen Objekts genutzt werden, während der Lidar-Sensor lediglich für ein zusätzliches Erfassen der Polarisationseigenschaften genutzt wird. Durch das Erfassen zumindest einer dieser zwei Messgrößen anhand zweier unterschiedlicher Messmethoden erfolgt eine diversitäre Messung, welche die Zuverlässigkeit der Klassifizierung jeweiliger Objekte erhöht. Gemäß der EN ISO 13849 kann dann das Performance Level (PL) des Gesamtsystems vorteilhafterweise um ein Level erhöht werden.

Des Weiteren kann gemäß einer Weiterbildung eines solchen Verfahrens vorgesehen sein, dass die Schutzeinrichtung mittels des weiteren Sensors zusätzlich zu den Polarisationseigenschaften und/oder der Bewegungsmodulation auch einen oder mehrere kinematische Parameter des jeweiligen Objekts, insbesondere zumindest dessen Ort und/oder Geschwindigkeit, erfasst. Somit erfolgt nicht nur das Erfassen der Polarisationseigenschaften und/oder der Bewegungsmodulation, sondern auch das Erfassen zumindest eines kinematischen Parameters des jeweiligen Objekts auf diversitäre Weise. Dadurch wird nicht nur die Klassifizierung des jeweiligen Objekts zuverlässiger, sondern auch das Ansteuern der beweglichen Maschine zu einer möglicherweise erforderlichen Schutzmaßnahme, die von den erfassten kinematischen Parametern des jeweiligen Objekts abhängt.

Die Aufgabe der Erfindung wird auch durch eine Schutzeinrichtung für eine bewegliche Maschine gelöst, die zur Ausführung eines erfindungsgemäßen Verfahrens, insbesondere nach einer der vorstehend beschriebenen Ausführungsformen, ausgebildet ist. Die vorteilhaften Eigenschaften einer solchen Schutzeinrichtung ergeben sich dabei insbesondere aus den vorteilhaften Eigenschaften des jeweiligen Verfahrens. Die Schutzeinrichtung kann insbesondere dazu ausgebildet sein, in der Nähe eines Werkzeugs der beweglichen Maschine angeordnet zu werden. Dazu ist die Schutzeinrichtung vorzugweise als bauliche Einheit ausgebildet, die insbesondere durch ein Gehäuse nach außen abgegrenzt ist. Eine derartige Schutzeinrichtung kann einfach an bestehende bewegliche Maschinen angeordnet werden, so dass eine entsprechende Schutzfunktion bei einer beweglichen Maschine auf einfache Weise nachgerüstet werden kann.

Vorzugsweise umfasst die Schutzeinrichtung einen Sensor, der dazu ausgebildet ist, sowohl Polarisationseigenschaften als auch eine Bewegungsmodulation, vorzugsweise auch einen oder mehrere kinematische Parameter, des jeweiligen Objekts zu erfassen. Dabei werden die Polarisationseigenschaften und die Bewegungsmodulation sowie gegebenenfalls die kinematischen Parameter mittels desselben einen Sensors erfasst. Dieser Sensor kann insbesondere als Radar-Sensor ausgebildet sein und eine Sendeantenne zum Aussenden von Mikrowellenstrahlung mit einer ersten Polarisation sowie zwei Empfangsantennen umfassen, von denen eine zum Empfangen von Mikrowellenstrahlung mit der ersten Polarisation und die anderen zum Empfangen von Mikrowellenstrahlung mit einer zu der ersten Polarisation orthogonalen zweiten Polarisation ausgebildet ist. Die Polarisation der als Strahlungsquelle fungierenden Sendeantenne und der als Detektoren fungierenden Empfangsantennen kann sich dabei insbesondere direkt durch die Ausrichtung der jeweiligen Antenne im Raum ergeben, so dass auf gesonderte Polarisatoren verzichtet werden kann.

Gemäß einer vorteilhaften Weiterbildung der Schutzeinrichtung, umfasst diese einen weiteren Sensor, dessen Messprinzip sich von demjenigen des genannten Sensors unterscheidet und der dazu ausgebildet ist, die Polarisationseigenschaften und/oder die Bewegungsmodulation des jeweiligen Objekts zu erfassen. Durch diesen weiteren Sensor ist die Schutzeinrichtung somit dazu ausgebildet, die Polarisationseigenschaften und/oder die Bewegungsmodulation diversitär zu erfassen. Dabei kann der weitere Sensor insbesondere als optischer Sensor, bevorzugt als Lidar-Sensor, ausgebildet sein und eine Strahlungsquelle zum Aussenden von optischer Strahlung mit einer ersten Polarisation sowie zwei optische Detektoren umfassen, von denen einer zum Empfangen von optischer Strahlung mit einer ersten Polarisation und der andere zum Empfangen von optischer Strahlung mit einer zu der ersten Polarisation orthogonalen zweiten Polarisation ausgebildet ist. Auf diese Weise können insbesondere die Polarisationseigenschaften des jeweiligen Objekts diversitär erfasst werden. Zudem kann der weitere Sensor auch zum Erfassen zumindest eines kinematischen Parameters des jeweiligen Objekts ausgebildet sein, so dass gegebenenfalls auch ein oder mehrere kinematische Parameter diversitär erfasst werden können.

Ferner ist es bevorzugt, dass der Sensor und der weitere Sensor fest zueinander, insbesondere in einem gemeinsamen Gehäuse, angeordnet sind, um als gemeinsame Sensoreinheit an der beweglichen Maschine angeordnet zu werden. Durch Vorsehen einer derartigen Sensoreinheit an einer beweglichen Maschine kann eine Umgebung der beweglichen Maschine auf einfache Weise, aber dennoch zuverlässig und diversitär auf die Anwesenheit von Menschen überwacht werden. Eine Sensoreinheit der Schutzeinrichtung muss aber nicht zwingend einen Sensor sowie einen weiteren Sensor umfassen, sondern kann aber auch lediglich einen einzigen Sensor aufweisen. Ferner kann die Schutzeinrichtung mehrere Sensoreinheiten umfassen, die an der beweglichen Maschine separat voneinander angeordnet werden können. Auf diese Weise kann mittels der verschiedenen Sensoreinheiten ein jeweils anderer Teil der Umgebung der beweglichen Maschine und somit eine insgesamt größere Umgebung der beweglichen Maschine überwacht werden. Die Sensoreinheiten werden dabei bevorzugt derart angeordnet, dass die zu überwachende Umgebung möglichst lückenlos vollständig abgedeckt wird.

Indem die Schutzeinrichtung die bewegliche Maschine in Abhängigkeit von kinematischen Parametern eines oder mehrerer jeweils als Mensch klassifizierter Objekte in der Umgebung der beweglichen Maschine zu einer Schutzmaßnahme ansteuern kann, ermöglicht die Schutzeinrichtung eine sichere Verwendung der beweglichen Maschine im Rahmen einer Mensch-Roboter-Kollaboration.

Darüber hinaus kann vorgesehen sein, dass die Schutzeinrichtung zwei oder mehr Sensoreinheiten mit jeweils zumindest einem Sensor zum Erfassen von Polarisationseigenschaften sowie einer Bewegungsmodulation eines jeweiligen Objekts aufweist, mittels welcher unterschiedliche Bereiche der Umgebung der beweglichen Maschine überwacht werden. Diese Bereiche, die Sichtfeldern der jeweiligen Sensoreinheiten entsprechen, können teilweise überlappen, um sicherzustellen, dass zwischen benachbarten Bereichen keine unüberwachten Lücken verbleiben. Durch die mehreren Sensoreinheiten kann somit ein insgesamt größerer Bereich um die bewegliche Maschine bzw. um einen gefahrenträchtigen Teil der beweglichen Maschine gesichert werden.

Beispielsweise kann vorgesehen sein, dass die Sensoreinheiten um ein Werkzeug, das an einem Ende eines Roboterarms vorgesehen ist, verteilt, insbesondere regelmäßig verteilt, angeordnet werden. Wenn die Bereiche, die von den verschiedenen Sensoreinheiten überwacht werden, überlappen, kann es erforderlich sein, die von verschiedenen Sensoreinheiten ausgesandte Strahlung für eine eindeutige Zuordnung unterscheiden zu können. Dazu können Sensoreinheiten, deren Überwachungsbereiche überlappen, koordiniert dazu angesteuert werden, Strahlung nur zeitlich getrennt voneinander auszusenden. Da das Erfassen der Polarisationseigenschaften, der Bewegungsmodulation und/oder des einen oder der mehreren kinematischen Parameter jeweils gepulst erfolgen kann, können die Pulse der Sensoreinheiten so phasenverschoben sein, dass die Sensoreinheiten nicht gleichzeitig, sondern beispielsweise abwechselnd Strahlung aussenden. Alternativ oder zusätzlich zu einer derartigen zeitlichen Trennung kann eine Trennung der Frequenzen vorgesehen werden, indem zumindest jeweils diejenigen Sensoreinheiten, deren Überwachungsbereiche überlappen, Strahlung unterschiedlicher Frequenz oder unterschiedlicher, insbesondere disjunkter, Frequenzbereiche aussenden. Die Frequenzen bzw. Frequenzbereiche sind dabei vorzugsweise derart separat, dass trotz möglicher Frequenzverschiebungen eine empfangene Strahlung jeweils eindeutig der Sensoreinheit, von der sie stammt, zugeordnet werden kann.

Die Aufgabe der Erfindung wird ferner durch eine bewegliche Maschine mit zumindest einer erfindungsgemäßen Schutzeinrichtung gelöst, insbesondere mit einer Schutzeinrichtung gemäß einer der vorstehend beschriebenen Ausführungsformen. Bei der beweglichen Maschine kann es sich insbesondere um einen Roboter handeln.

Die Erfindung wird nachfolgend lediglich beispielhaft unter Bezugnahme auf die Figuren weiter erläutert.
- Fig. 1: zeigt in schematischer Darstellung eine bewegliche Maschine mit einer Schutzeinrichtung, die zur Ausführung des erfindungsgemäßen Verfahrens zum Schutz von Menschen in einer Umgebung der beweglichen Maschine ausgebildet ist.
- Fig. 2: zeigt ein Beispiel für eine im Rahmen des erfindungsgemäßen Verfahrens erfasste Bewegungsmodulation.
- Fig. 3: zeigt einen Sensor einer erfindungsgemäßen Schutzeinrichtung gemäß einer ersten Ausführungsform.
- Fig. 4: zeigt einen Sensor einer erfindungsgemäßen Schutzeinrichtung gemäß einer zweiten Ausführungsform.

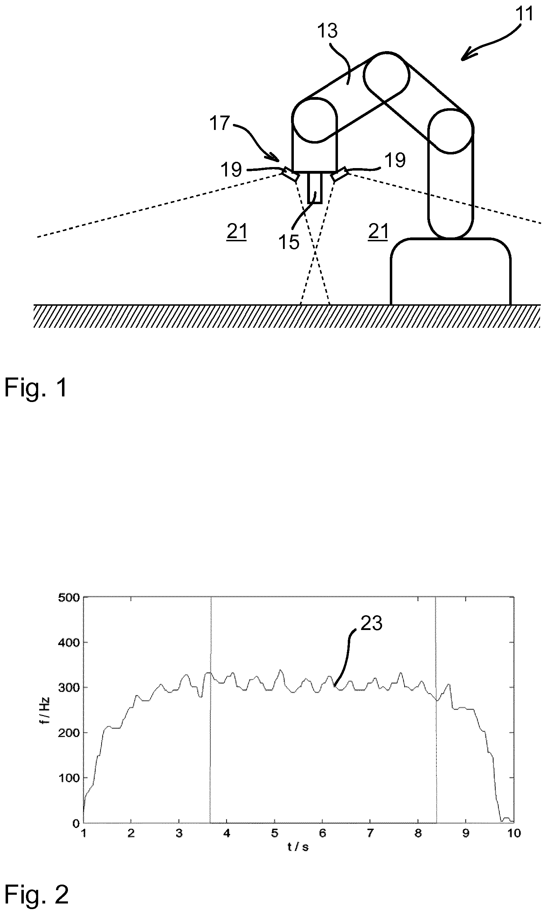

In Fig. 1 ist in stark vereinfachter schematischer Darstellung eine erfindungsgemäße bewegliche Maschine 11 darstellt, bei der es sich um einen Roboter handelt. Die bewegliche Maschine 11 umfasst einen gelenkigen Roboterarm 13 an dessen freiem Ende ein Werkzeug 15 zum Greifen oder zur Bearbeitung eines nicht dargestellten Werkstücks vorgesehen ist. Durch Bewegen des Roboterarms 15 kann das Werkzeug 15 in einem Umfeld der beweglichen Maschine 11 flexibel positioniert werden. Da von dem Werkzeug 15 eine Gefahr für in dem Umfeld anwesende Menschen ausgehen kann, wird zur Ermöglichung einer Mensch-Roboter-Kollaboration das Umfeld der beweglichen Maschine 11 nach dem Sicherungskonzept des "Speed and Separation Monitoring" überwacht.

Dazu weist die bewegliche Maschine 11 eine erfindungsgemäße Schutzeinrichtung 17 auf. Die Schutzeinrichtung 17 umfasst mehrere einander im Wesentlichen entsprechende, insbesondere baugleiche, Sensoreinheiten 19, welche um das Werkzeug 15 verteilt an dem freien Ende des Roboterarms 13 angeordnet sind. In der schematischen Darstellung sind zwei bezüglich des Werkzeugs 15 diametral angeordnete Sensoreinheiten 19 gezeigt. Die Schutzeinrichtung 17 ist dazu ausgebildet, ein erfindungsgemäßes Verfahren zum Schutz von Menschen in der Umgebung der beweglichen Maschine 11 auszuführen. Dazu überwachen die Sensoreinheiten 19 einen jeweils anderen Teil der Umgebung der beweglichen Maschine 11, der ihrem jeweiligen Sichtfeld 21 entspricht. Die Sichtfelder 21 verschiedener Sensoreinheiten 19 überlappen dabei teilweise. Um das zu überwachende Umfeld der beweglichen Maschine 11 möglichst umfassend abzudecken, können auch mehr als die dargestellten zwei Sensoreinheiten 19 vorgesehen sein.

Mittels der Sensoreinheiten 19 der Schutzeinrichtung 17 können kinematische Parameter eines jeweiligen Objekts (nicht dargestellt), das sich gerade in dem Sichtfeld 21 einer jeweiligen Sensoreinheit 19 befindet, erfasst werden. Die Schutzeinrichtung 17 kann dann, beispielsweise mittels einer nicht gezeigten Auswerte- und Steuereinheit, die bewegliche Maschine 11 in Abhängigkeit von den erfassten kinematischen Parametern zu einer Schutzmaßnahme ansteuern. Das von der Schutzeinrichtung 17 ausgeführte Verfahren ermöglicht dabei, dass für das Ansteuern der beweglichen Maschine 11 zu einer Schutzmaßnahme auch das Ergebnis eines Klassifizierens des jeweiligen Objekts im Hinblick darauf berücksichtigt wird, ob es sich bei dem jeweiligen Objekt um einen Menschen handelt. Dazu werden mittels der Sensoreinheiten 19 jeweils Polarisationseigenschaften sowie eine Bewegungsmodulation des jeweiligen Objekts erfasst, anhand deren die genannte Klassifizierung des jeweiligen Objekts dann erfolgt.

Die Bewegungsmodulation wird erfasst, indem ein jeweiliges Objekts bei seiner Bewegung innerhalb der Umgebung der beweglichen Maschine 11 verfolgt und seine Geschwindigkeit dabei gemessen wird. Dabei werden die unter Umständen unterschiedlichen Geschwindigkeiten verschiedener Teil des jeweiligen Objekts (z.B. Arme und Beine eines gehenden Menschen) gemeinsam erfasst. Die Geschwindigkeiten können insbesondere anhand der geschwindigkeitsabhängigen Dopplerverschiebung der an dem jeweiligen Objekt reflektierten Strahlung gemessen werden. Aus den fortlaufend erfassten Geschwindigkeiten kann durch Transformation in den Frequenzraum ein Frequenzverlauf gebildet werden, der eine Modulation aufweisen, wie sie in Fig. 2 gezeigt ist und die eine Bewegungsmodulation 23 im Sinne der vorliegenden Anmeldung darstellt.

Bei der in Fig. 2 gezeigten Bewegungsmodulation 23 handelt es sich um ein typisches Muster für die Frequenzen einer menschlichen Bewegung, die sich in charakteristischer Weise von der Bewegung eines stehenden oder bewegten nicht-menschlichen Objekts unterscheidet. Es handelt sich dabei um die Bewegung eines gehenden Menschen. In einem mittleren Bereich, der in Fig. 2 durch zwei vertikale Striche begrenzt wird, liegt die erfasste Dopplerfrequenz bei etwa 300 Hz, was der allgemeinen Bewegungsgeschwindigkeit des erfassten Menschen in dem entsprechenden Zeitraum entspricht. Die Frequenz wird dabei durch eine sinusähnliche Schwingung überlagert. Diese zusätzliche Modulation ergibt sich daraus, dass sich ein Mensch nicht als starrer Körper bewegt, sondern sich beim Gehen insbesondere Arme, Beine und der Oberkörper auch relativ zueinander bewegen, wobei diese Relativbewegungen einem typischen regelmäßigen Bewegungsablauf folgen. Daher stellt das Erfassen einer Bewegungsmodulation 23, die ein entsprechendes Muster wie die in Fig. 2 gezeigte Bewegungsmodulation 23 aufweist, einen Hinweis darauf dar, dass es sich bei dem erfassten Objekt um einen Menschen handelt. So kann das Erfassen einer Bewegungsmodulation 23 eines jeweiligen Objekts als Kriterium für die Klassifizierung des jeweiligen Objekts im Hinblick darauf herangezogen werden, ob es sich bei dem jeweiligen Objekt um einen Menschen handelt.

Für das Auswerten einer erfassten Bewegungsmodulation 23 kann eine Transformation in den Frequenzraum zweckmäßig sein, da sich bestimmte Muster im Frequenzraum besser erkennen lassen. Eine solche Transformation muss aber nicht zwangsläufig erfolgen. Alternativ können erfasste Signalverläufe, die gegebenenfalls eine Bewegungsmodulation 23 enthalten, auch direkt, z.B. mit Hilfe entsprechend trainierter neuronaler Netze, ausgewertet werden. Zudem können auch Bewegungsmodulationen 23, die von nicht-menschlichen Objekten erfasst werden, noch ergänzend nützlich sein. Beispielsweise können erfasste Bewegungsmodulationen 23 vibrierender nicht-menschlicher Objekte dazu genutzt werden, diese Objekte zu einem späteren Zeitpunkt wiederzuerkennen. So können etwa im Rahmen einer Kalibrationsfahrt eines Roboters derartige Objekte, insbesondere auch deren jeweilige Position im Umfeld des Roboters, erfasst werden und später durch Wiedererkennen der Objekte als Referenzen, insbesondere nach Art von räumlichen Markern, genutzt werden.

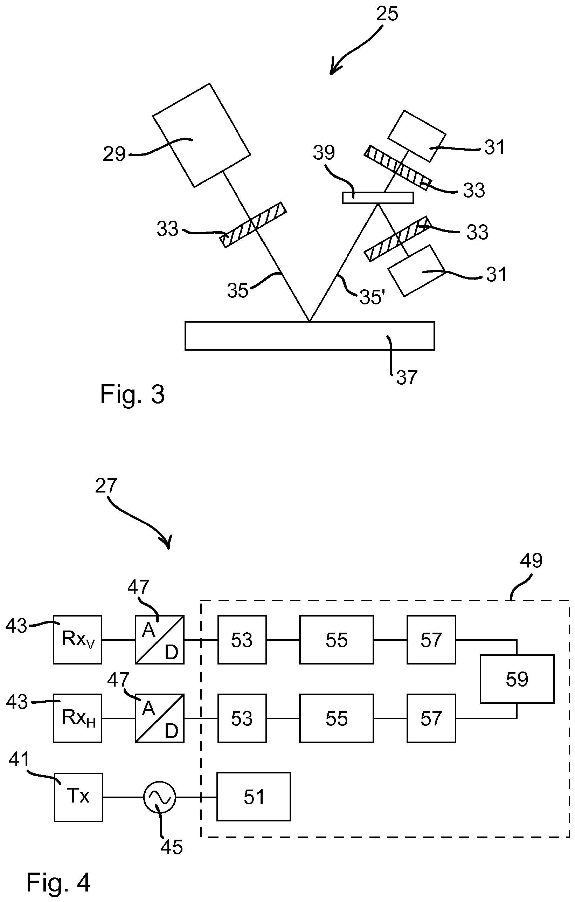

Vorzugsweise umfassen die Sensoreinheiten 19 jeweils einen optischen Sensor, insbesondere einen Lidar-Sensor 25, wie er in Fig. 3 schematisch dargestellt ist, sowie einen Radar-Sensor 27, wie er in Fig. 4 schematisch dargestellt ist. Die Kombination zweier Sensoren, die auf unterschiedlichen Messprinzipien beruhen, zur Messung derselben Messgröße, insbesondere der genannten Polarisationseigenschaften und/oder der Bewegungsmodulation 23 des jeweiligen Objekts, ermöglicht eine diversitäre und somit besonders zuverlässige Überwachung der Umgebung. Die Sensoreinheiten 19 der in Fig. 1 gezeigten Ausführungsform weisen dabei jeweils ein Gehäuse auf, in dem beide Sensoren 25, 27 zusammen aufgenommen sind.

Der in Fig. 3 gezeigte Lidar-Sensor 25 umfasst eine Strahlungsquelle 29, insbesondere einen Laser, sowie zwei optische Detektoren 31. Die Strahlungsquelle 29 und die zwei Detektoren 31 weisen jeweils einen Polarisator 33 in Form eines Filters auf, das lediglich in einer bestimmten Richtung linear polarisierte Strahlung durchlässt. Dabei ist von den zwei Polarisatoren 33, die zu den beiden Detektoren 31 gehören, relativ zu dem Polarisator 33 der Strahlungsquelle 29 einer copolarisiert und der andere kreuzpolarisiert. Die Strahlungsquelle 29 ist dazu ausgebildet, Strahlung 35 auszusenden, die durch den Polarisator 33 der Strahlungsquelle 29 linear polarisiert wird. In der schematischen Darstellung der Fig. 3 trifft die Strahlung 35 auf eine Metalloberfläche 37 und wird von dieser reflektiert. Die Strahlung 35 kann aber grundsätzlich von einem beliebigen jeweiligen Objekt zumindest teilweise reflektiert werden, so dass ein Anteil der reflektierten Strahlung 35' in Richtung zurück zum Lidar-Sensor 25, insbesondere zu dessen Detektoren 31, gelangt.

Mittels eines Strahlteilers 39 wird die reflektierte Strahlung 35' vorzugsweise zu gleichen Anteilen auf die beiden Detektoren 31 gelenkt, wobei sie jeweils den zugehörigen Polarisator 33 passieren muss. Auf diese Weise kann mittels des einen Detektors 31 der copolarisierte Anteil und mittels des anderen Detektors 31 der kreuzpolarisierte Anteil der reflektierten Strahlung 35' erfasst werden. Daraus lässt sich dann die Polarisation der reflektieren Strahlung 35' bestimmen und insbesondere ein Verhältnis bilden, das als Kenngröße für die Polarisationseigenschaften des jeweiligen Objekts, an dem die Strahlung 35 reflektiert wurde, herangezogen werden kann. Bei Reflexion an einer Metalloberfläche 37 kann sich die Polarisation der Strahlung 35 zwar ändern, z.B. elliptisch werden, was dann anhand der beiden Detektoren 31 festgestellt werden kann. Die Auswirkungen einer Reflexion an einer Metalloberfläche 37 auf die Polarisation der Strahlung 35 unterscheiden sich aber wesentlich von denen einer Reflexion an einer nicht-metallischen Oberfläche, bei der in der Regel die reflektierte Strahlung 35' keine definierte Polarisation mehr aufweist. Anhand der erfassten Polarisationseigenschaften eines jeweiligen Objekts kann daher gegebenenfalls festgestellt werden, dass das jeweilige Objekt eine Metalloberfläche 37 aufweist und folglich kein Mensch ist. Zwar dürfte es nicht möglich sein, ein jeweiliges Objekt anhand seiner Polarisationseigenschaften positiv als Mensch zu identifizieren. In Verbindung mit zumindest einem anderen Kriterium, das, wie insbesondere die genannte Bewegungsmodulation 23, eine positive Feststellung erlaubt, können die Polarisationseigenschaften aber zu einer zuverlässigen Klassifizierung beitragen.

Der in Fig. 4 in schematischer Darstellung gezeigte Radar-Sensor 27 ist auf grundsätzlich entsprechende Weise wie der in Fig. 3 gezeigte Lidar-Sensor 25 ausgebildet. Der Radar-Sensor 27 umfasst eine Sendeantenne 41, die zum Aussenden von horizontal oder vertikal polarisierter Mikrowellenstrahlung entsprechend ausgerichtet ist, sowie zwei Empfangsantennen 43, von denen eine zum Empfangen horizontal polarisierter Strahlung und die andere zum Empfangen vertikal polarisierter Strahlung ausgerichtet ist. Zum richtungsspezifischen Erfassen reflektierter Mikrowellenstrahlung können die Empfangsantennen 43 als Phased-Array-Antennen ausgebildet sein. Die Sendeantenne 41 wird von einer Spannungsquelle 45 zum Aussenden von Signalen spannungsversorgt. An den Empfangsantennen 43 empfangene Signale werden mittels zweier Ananog-Digital-Wandler 47, die jeweils einer Empfangsantenne 43 zugeordnet sind, digitalisiert.

Auf der digitalen Ebene werden die von der Sendeantenne 41 auszusendenden Signale und die von den Empfangsantennen 43 empfangenen Signale mittels einer digitalen Signalverarbeitung 49 erzeugt bzw. ausgewertet, die verschiedene Module 51-59 umfasst. Diese Module 51-59 können als gesonderte Programmmodule ausgebildet oder auch rein funktional definiert sein. Das Modul 51 dient der Signalerzeugung und steuert die Spannungsquelle 45 in entsprechender Weise an. Die von den Empfangsantennen 43 empfangenen und von den Analog-Digital-Wandlern 47 digitalisierten Signale werden jeweils durch ein Modul 53 zunächst vorverarbeitet und durchlaufen danach im Modul 55 eine Zeit-FrequenzTransformation. Das Modul 57 dient anschließend jeweils der Detektion bestimmter Muster, insbesondere einer für einen Menschen typischen Bewegungsmodulation 23, in den jeweiligen Signalen. Die über die beiden verschiedenen Empfangsantennen 43 erhaltenen Signale werden schließlich ferner in einem weiteren Modul 59 zueinander ins Verhältnis gesetzt, um die Polarisation der reflektierten Mikrowellenstrahlung zu bestimmen und daraus die Polarisationseigenschaften des jeweiligen Objekts, das die Strahlung reflektiert hat, zu bestimmen. Die digitale Signalverarbeitung 49 kann darüber hinaus weitere Module umfassen, um auf Grundlage der empfangenen Signale ferner auch kinematische Parameter, insbesondere den Ort und/oder die Geschwindigkeit des jeweiligen Objekts, zu bestimmen.

Dadurch, dass zumindest die Polarisationseigenschaften, gegebenenfalls auch kinematische Parameter des jeweiligen Objekts, auf zwei unterschiedliche Weisen erfasst werden, nämlich sowohl mittels des Lidar-Sensors 25 als auch mittels des Radar-Sensors 27, die zu einer Sensoreinheit 19 zusammengefasst sind, ist die Schutzeinrichtung 17 in dieser Hinsicht diversitär. Dies ermöglicht ein besonders zuverlässiges Erfassen der jeweiligen Messgrößen. Zudem kann die bewegliche Maschine 11 dadurch, dass das jeweilige Objekt zunächst als Mensch oder nicht-menschliches Objekt klassifiziert wird, bevor Schutzmaßnahmen in Abhängigkeit von dem Ergebnis dieser Klassifizierung sowie von kinematischen Parametern des jeweiligen Objekts ausgelöst werden, besonders spezifisch Menschen schützen und dabei vergleichsweise effizient sein.

### Bezugszeichen

- 11: bewegliche Maschine
- 13: Roboterarm
- 15: Werkzeug
- 17: Schutzeinrichtung
- 19: Sensoreinheit
- 21: Sichtfeld
- 23: Bewegungsmodulation
- 25: Lidar-Sensor
- 27: Radar-Sensor
- 29: Strahlungsquelle
- 31: Detektor
- 33: Polarisator
- 35, 35': Strahlung
- 37: Metalloberfläche
- 39: Strahlteiler
- 41: Sendeantenne
- 43: Empfangsantenne
- 45: Spannungsquelle
- 47: Analog-Digital-Wandler
- 49: digitale Signalverarbeitung
- 51-59: Modul

## Patentansprüche

1. Verfahren zum Schutz von Menschen in einer Umgebung einer beweglichen Maschine (11), insbesondere im Rahmen einer Mensch-Roboter-Kollaboration, welches umfasst,
dass die Umgebung mittels einer Schutzeinrichtung (17) überwacht wird, die dazu ausgebildet ist, einen oder mehrere kinematische Parameter eines jeweiligen in der Umgebung befindlichen Objekts zu erfassen und die bewegliche Maschine (11) in Abhängigkeit von erfassten kinematischen Parametern des jeweiligen Objekts zu einer Schutzmaßnahme anzusteuern, **dadurch gekennzeichnet,**
**dass** die Schutzeinrichtung (17) Polarisationseigenschaften sowie eine Bewegungsmodulation (23) des jeweiligen Objekts erfasst,
**dass** das jeweilige Objekt in Abhängigkeit sowohl von den erfassten Polarisationseigenschaften als auch von der erfassten Bewegungsmodulation (23) im Hinblick darauf klassifiziert wird, ob es sich bei dem jeweiligen Objekt um einen Menschen handelt, und
**dass** die Schutzeinrichtung (17) dann, insbesondere nur dann, wenn das jeweilige Objekt als Mensch klassifiziert wurde, die bewegliche Maschine (11) in Abhängigkeit von erfassten kinematischen Parametern dieses jeweiligen Objekts, insbesondere in Abhängigkeit von dem Ort und der Geschwindigkeit des jeweiligen Objekts relativ zu der beweglichen Maschine (11), zu der Schutzmaßnahme ansteuert.

2. Verfahren nach Anspruch 1,
wobei das Erfassen der Polarisationseigenschaften umfasst, dass eine Veränderung der Polarisation elektromagnetischer Strahlung (35) bei einer Reflexion der elektromagnetischen Strahlung (35) an dem jeweiligen Objekt erfasst wird.

3. Verfahren nach Anspruch 1 oder 2,
wobei das Erfassen der Bewegungsmodulation (23) umfasst, dass das jeweilige Objekt in der Umgebung verfolgt wird, dass dabei ein zeitlicher Verlauf von dessen Geschwindigkeit erfasst wird und dass in dem Verlauf eine Modulation identifiziert wird.

4. Verfahren nach zumindest einem der vorstehenden Ansprüche, wobei die Schutzeinrichtung (17) das jeweilige Objekt dann als Mensch klassifiziert, wenn zum einen
- die erfassten Polarisationseigenschaften des jeweiligen Objekts nicht Polarisationseigenschaften entsprechen, die für ein nicht-menschliches Objekt, insbesondere für Metall, zu erwarten sind, für einen Menschen hingegen nicht zu erwarten sind,
und wenn zum anderen
- die erfasste Bewegungsmodulation (23) des jeweiligen Objekts einer Bewegungsmodulation (23) entspricht, die für einen Menschen zu erwarten ist.

5. Verfahren nach zumindest einem der vorstehenden Ansprüche, wobei die Schutzeinrichtung (17) die Polarisationseigenschaften und die Bewegungsmodulation des jeweiligen Objekts mittels desselben Sensors (27), insbesondere mittels eines Radar-Sensors (27), erfasst.

6. Verfahren nach Anspruch 5,
wobei die Schutzeinrichtung (17) mittels des genannten Sensors (27) zusätzlich zu den Polarisationseigenschaften und der Bewegungsmodulation (23) auch einen oder mehrere kinematische Parameter des jeweiligen Objekts, insbesondere zumindest dessen Ort und/oder dessen Geschwindigkeit, erfasst.

7. Verfahren nach Anspruch 5 oder 6,
wobei die Schutzeinrichtung (17) mittels zumindest eines weiteren Sensors (25), dessen Messprinzip sich von demjenigen des genannten Sensors (27) unterscheidet, insbesondere mittels eines optischen Sensors (25), die Polarisationseigenschaften und/oder die Bewegungsmodulation (23) des jeweiligen Objekts erfasst.

8. Verfahren nach Anspruch 7,
wobei die Schutzeinrichtung (17) mittels des weiteren Sensors (25) zusätzlich zu den Polarisationseigenschaften und/oder der Bewegungsmodulation (23) auch einen oder mehrere kinematische Parameter des jeweiligen Objekts, insbesondere zumindest dessen Ort und/oder dessen Geschwindigkeit, erfasst.

9. Schutzeinrichtung (17) für eine bewegliche Maschine (11), wobei die Schutzeinrichtung (17) zur Ausführung eines Verfahrens nach einem der vorstehenden Ansprüche ausgebildet ist.

10. Schutzeinrichtung nach Anspruch 9,
wobei die Schutzeinrichtung (17) einen Sensor (27) umfasst, der dazu ausgebildet ist, sowohl Polarisationseigenschaften als auch eine Bewegungsmodulation (23), vorzugsweise auch einen oder mehrere kinematische Parameter, des jeweiligen Objekts zu erfassen.

11. Schutzeinrichtung nach Anspruch 10,
wobei der Sensor (27) als Radar-Sensor (27) ausgebildet ist und eine Sendeantenne (41) zum Aussenden von Mikrowellenstrahlung mit einer ersten Polarisation sowie zwei Empfangsantennen (43) umfasst, von denen eine zum Empfangen von Mikrowellenstrahlung mit der ersten Polarisation und die andere zum Empfangen von Mikrowellenstrahlung mit einer zu der ersten Polarisation orthogonalen zweiten Polarisation ausgebildet ist.

12. Schutzeinrichtung nach Anspruch 10 oder 11,
wobei die Schutzeinrichtung (17) einen weiteren Sensor (25) umfasst, dessen Messprinzip sich von demjenigen des genannten Sensors (27) unterscheidet und der dazu ausgebildet ist, die Polarisationseigenschaften und/oder die Bewegungsmodulation (23) des jeweiligen Objekts zu erfassen.

13. Schutzeinrichtung nach Anspruch 12,
wobei der weitere Sensor (25) als optischer Sensor (25), insbesondere Lidar-Sensor (25), ausgebildet ist und eine Strahlungsquelle (29) zum Aussenden von optischer Strahlung (35) mit einer ersten Polarisation sowie zwei optische Detektoren (31) umfasst, von denen einer zum Empfangen von optischer Strahlung (35) mit der ersten Polarisation und der andere zum Empfangen von optischer Strahlung (35) mit einer zu der ersten Polarisation orthogonalen zweiten Polarisation ausgebildet ist.

14. Schutzeinrichtung nach Anspruch 12 oder 13,
wobei der Sensor (27) und der weitere Sensor (25) fest zueinander, insbesondere in einem gemeinsamen Gehäuse, angeordnet sind, um als gemeinsame Sensoreinheit (19) an der beweglichen Maschine (11) angeordnet zu werden,
wobei die Schutzeinrichtung (17) vorzugsweise zwei oder mehr Sensoreinheiten (19) mit jeweils zumindest einem Sensor (27) zum Erfassen von Polarisationseigenschaften sowie einer Bewegungsmodulation (23) eines jeweiligen Objekts aufweist, mittels welcher unterschiedliche Bereiche der Umgebung der beweglichen Maschine (11) überwacht werden.

15. Bewegliche Maschine (11), insbesondere Roboter, mit zumindest einer Schutzeinrichtung (17) nach einem der Ansprüche 9 bis 14.

## Claims

1. A method of protecting humans in an environment of a moving machine (11), in particular within the framework of a human-robot collaboration, said method comprising
the environment being monitored by means of protective equipment (17) which is configured to detect one or more kinematic parameters of a respective object present in the environment and to control the moving machine (11) in dependence on detected kinematic parameters of the respective object to initiate a protective measure,
**characterized in that**
the protective equipment (17) detects polarization properties and a movement modulation (23) of the respective object;
**in that** the respective object is classified in dependence on both the detected polarization properties and on the detected movement modulation (23) with respect to whether the respective object is a human; and
**in that**, in particular only when the respective object was classified as a human, the protective equipment (17) controls the moving machine (11) to initiate the protective measure in dependence on detected kinematic parameters of this respective object, in particular in dependence on the location and speed of the respective object relative to the moving machine (11).

2. A method in accordance with claim 1,
wherein the detection of the polarization properties comprises a change of the polarization of electromagnetic radiation (35) being detected on a reflection of the electromagnetic radiation (35) at the respective object.

3. A method in accordance with claim 1 or claim 2,
wherein the detection of the movement modulation (23) comprises the respective object being tracked in the environment; a time progression of its speed being detected in so doing; and a modulation being identified in the progression.

4. A method in accordance with at least one of the preceding claims,
wherein the protective equipment (17) classifies the respective object as a human when, on the one hand,
- the detected polarization properties of the respective object do not correspond to polarization properties which are to be expected for a non-human object, in particular for metal, but are not to be expected for a human;
and when, on the other hand,
- the detected movement modulation (23) of the respective object corresponds to a movement modulation (23) which is to be expected for a human.

5. A method in accordance with at least one of the preceding claims,
wherein the protective equipment (17) detects the polarization properties and the movement modulation of the respective object by means of the same sensor (27), in particular by means of a radar sensor (27).

6. A method in accordance with claim 5,
wherein the protective equipment (17) also detects, in addition to the polarization properties and the movement modulation (23), one or more kinematic parameters of the respective object, in particular at least its location and/or its speed, by means of said sensor (27).

7. A method in accordance with claim 5 or claim 6,
wherein the protective equipment (17) detects the polarization properties and/or the movement modulation (23) of the respective object by means of at least one further sensor (25) whose measurement principle differs from that of said sensor (27), in particular by means of an optical sensor (25).

8. A method in accordance with claim 7,
wherein the protective equipment (17) also detects, in addition to the polarization properties and/or the movement modulation (23), one or more kinematic parameters of the respective object, in particular at least its location and/or its speed, by means of the further sensor (25).

9. Protective equipment (17) for a moving machine (11), wherein the protective equipment (17) is configured to carry out a method in accordance with any one of the preceding claims.

10. Protective equipment in accordance with claim 9,
wherein the protective equipment (17) comprises a sensor (27) which is configured to detect both polarization properties and a movement modulation (23), preferably also one or more kinematic parameters, of the respective object.

11. Protective equipment in accordance with claim 10,
wherein the sensor (27) is configured as a radar sensor (27) and comprises one transmission antenna (41) for transmitting microwave radiation having a first polarization and two reception antennas (43) of which one is configured to receive microwave radiation having the first polarization and the other is configured to receive microwave radiation having a second polarization orthogonal to the first polarization.

12. Protective equipment in accordance with claim 10 or claim 11,
wherein the protective equipment (17) comprises a further sensor (25) whose measurement principle differs from that of said sensor (27) and which is configured to detect the polarization properties and/or the movement modulation (23) of the respective object.

13. Protective equipment in accordance with claim 12,
wherein the further sensor (25) is configured as an optical sensor (25), in particular as a lidar sensor (25), and comprises one radiation source (29) for transmitting optical radiation (25) having a first polarization and two optical detectors (31) of which one is configured to receive optical radiation (35) having a first polarization and the other is configured to receive optical radiation (35) having a second polarization orthogonal to the first polarization.

14. Protective equipment in accordance with claim 12 or claim 13,
wherein the sensor (27) and the further sensor (25) are arranged fixedly with respect to one another, in particular in a common housing, to be arranged at the moving machine (11) as a common sensor unit (19); and wherein the protective equipment (17) preferably has two or more sensor units (19) each having at least one sensor (27) for detecting polarization properties and a movement modulation (23) of a respective object by means of which different zones of the environment of the moving machine (11) are monitored.

15. A moving machine (11), in particular a robot, having at least one piece of protective equipment (17) in accordance with any one of the claims 9 to 14.

## Revendications

1. Procédé de protection d'êtres humains dans un environnement d'une machine mobile (11), en particulier dans le cadre d'une collaboration hommerobot, consistant à
surveiller l'environnement au moyen d'un dispositif de protection (17) qui est réalisé pour détecter un ou plusieurs paramètres cinématiques d'un objet respectif situé dans l'environnement et pour commander la machine mobile (11) en fonction des paramètres cinématiques détectés de l'objet respectif en vue d'une mesure de protection,
**caractérisé en ce que**
le dispositif de protection (17) détecte des propriétés de polarisation ainsi qu'une modulation de mouvement (23) de l'objet respectif, **en ce que** l'objet respectif est classifié aussi bien en fonction des propriétés de polarisation détectées qu'en fonction de la modulation de mouvement détectée (23), selon que l'objet respectif est un être humain ou non, et **en ce que** au cas où, en particulier uniquement au cas où l'objet respectif a été classifié comme un être humain, le dispositif de protection (17) commande alors la machine mobile (11) en vue de la mesure de protection en fonction des paramètres cinématiques détectés de cet objet respectif, en particulier en fonction de l'emplacement et de la vitesse de l'objet respectif par rapport à la machine mobile (11).

2. Procédé selon la revendication 1,
dans lequel
la détection des propriétés de polarisation comprend la détection d'un changement de la polarisation d'un rayonnement électromagnétique (35) lors d'une réflexion du rayonnement électromagnétique (35) au niveau de l'objet respectif.

3. Procédé selon la revendication 1 ou 2,
dans lequel
la détection de la modulation de mouvement (23) comprend le suivi de l'objet respectif dans l'environnement, détectant ainsi une évolution dans le temps de sa vitesse et identifiant une modulation dans ladite évolution.

4. Procédé selon l'une au moins des revendications précédentes, dans lequel
le dispositif de protection (17) classifie l'objet respectif comme un être humain si, d'une part,
- les propriétés de polarisation détectées de l'objet respectif ne correspondent pas aux propriétés de polarisation auxquelles on s'attend pour un objet non humain, en particulier pour un métal, mais auxquelles on ne s'attend pas pour un être humain,
et si, d'autre part,
- la modulation de mouvement détectée (23) de l'objet respectif correspond à une modulation de mouvement (23) à laquelle on s'attend pour un être humain.

5. Procédé selon l'une au moins des revendications précédentes, dans lequel
le dispositif de protection (17) détecte les propriétés de polarisation et la modulation de mouvement de l'objet respectif au moyen du même capteur (27), en particulier au moyen d'un capteur radar (27).

6. Procédé selon la revendication 5,
dans lequel
le dispositif de protection (17) détecte également, au moyen dudit capteur (27), en plus des propriétés de polarisation et de la modulation de mouvement (23), un ou plusieurs paramètres cinématiques de l'objet respectif, en particulier au moins son emplacement et/ou sa vitesse.

7. Procédé selon la revendication 5 ou 6,
dans lequel
le dispositif de protection (17) détecte les propriétés de polarisation et/ou la modulation de mouvement (23) de l'objet respectif au moyen d'au moins un autre capteur (25) dont le principe de mesure diffère de celui dudit capteur (27), en particulier au moyen d'un capteur optique (25).

8. Procédé selon la revendication 7,
dans lequel
le dispositif de protection (17) détecte également, au moyen dudit autre capteur (25), en plus des propriétés de polarisation et/ou de la modulation de mouvement (23), un ou plusieurs paramètres cinématiques de l'objet respectif, en particulier au moins son emplacement et/ou sa vitesse.

9. Dispositif de protection (17) pour une machine mobile (11), le dispositif de protection (17) étant réalisé pour mettre en oeuvre un procédé selon l'une des revendications précédentes.

10. Dispositif de protection selon la revendication 9,
le dispositif de protection (17) comprenant un capteur (27) réalisé pour détecter aussi bien des propriétés de polarisation qu'une modulation de mouvement (23), de préférence également un ou plusieurs paramètres cinématiques, de l'objet respectif.

11. Dispositif de protection selon la revendication 10,
dans lequel
le capteur (27) est réalisé sous forme de capteur radar (27) et comprend une antenne d'émission (41) pour émettre un rayonnement micro-ondes ayant une première polarisation, ainsi que deux antennes de réception (43) dont l'une est réalisée pour recevoir un rayonnement micro-ondes ayant la première polarisation et dont l'autre est réalisée pour recevoir un rayonnement micro-ondes ayant une deuxième polarisation orthogonale à la première polarisation.

12. Dispositif de protection selon la revendication 10 ou 11,
dans lequel
le dispositif de protection (17) comprend un autre capteur (25) dont le principe de mesure diffère de celui dudit capteur (27) et qui est réalisé pour détecter les propriétés de polarisation et/ou la modulation de mouvement (23) de l'objet respectif.

13. Dispositif de protection selon la revendication 12,
dans lequel
l'autre capteur (25) est réalisé sous forme de capteur optique (25), en particulier sous forme de capteur lidar (25), et comprend une source de rayonnement (29) pour émettre un rayonnement optique (35) ayant une première polarisation, ainsi que deux détecteurs optiques (31) dont l'un est réalisé pour recevoir un rayonnement optique (35) ayant la première polarisation et dont l'autre est réalisé pour recevoir un rayonnement optique (35) ayant une deuxième polarisation orthogonale à la première polarisation.

14. Dispositif de protection selon la revendication 12 ou 13,
dans lequel
le capteur (27) et l'autre capteur (25) sont disposés de manière fixe l'un par rapport à l'autre, en particulier dans un boîtier commun, afin d'être disposés comme une unité de capteur commune (19) sur la machine mobile (11),
le dispositif de protection (17) comprend de préférence deux ou plusieurs unités de capteur (19) ayant chacune au moins un capteur (27) pour détecter des propriétés de polarisation ainsi qu'une modulation de mouvement (23) d'un objet respectif, permettant de surveiller différentes zones de l'environnement de la machine mobile (11).

15. Machine mobile (11), en particulier robot, comportant au moins un dispositif de protection (17) selon l'une des revendications 9 à 14.
